# FASCICULE DE BREVET EUROPEEN

(11) **EP 3 034 365 B1**
(45) Date de publication et mention de la délivrance du brevet: **11.01.2017**
(21) Numéro de dépôt: 14307092.8
(22) Date de dépôt: 18.12.2014
(51) Int. Cl.: B60R 25/021, H01H 27/06

(54) **Antivol de colonne de direction**
Diebstahlsicherung für eine Lenksäule
Steering column lock

(43) Date de publication de la demande: 22.06.2016
(73) Titulaire: U-Shin France, 94046 Créteil Cedex (FR)
(72) Inventeur: Julien, Renaud, 94046 Creteil Cedex (FR)
(74) Mandataire: Gaillarde, Frédéric F. Ch.

(56) Documents cités:
- WO-A1-2014/091945
- US-A- 6 040 535
- US-A- 6 069 332

## Description

La présente se rapporte au domaine des antivols de colonne de direction, notamment pour véhicule automobile.

Ce type d'antivol de véhicule comprend généralement un corps d'antivol avec un logement pour interrupteur. Le logement est configuré pour recevoir un corps d'un interrupteur permettant d'alimenter en courant un démarreur du véhicule associé à l'antivol. Plus particulièrement, le corps d'interrupteur peut comprendre une platine, un rotor et un couvercle destinés à être logés dans le logement d'interrupteur.

Afin d'obtenir un bon fonctionnent électrique, il existe un antivol comprenant un interrupteur monté en force axialement entre deux demi corps d'antivol. Ces derniers logent au moins une partie de l'interrupteur, de sorte qu'après l'assemblage de l'antivol de colonne de direction, l'interrupteur est maintenu solidement dans le logement.

En outre, le fonctionnement électrique de l'interrupteur doit être assuré par un bon centrage dudit l'interrupteur dans le corps d'antivol selon un axe longitudinal. A cet effet, le corps d'interrupteur peut comprendre des godrons de centrage sur la platine et sur le couvercle coopérant avec une structure de centrage adaptée dans le logement pour centrer l'interrupteur.

Une telle configuration présente l'inconvénient qu'en cas de nécessité de remplacer un interrupteur défaillant, il est nécessaire de changer complètement l'antivol.

Un autre inconvénient est la nécessité de prévoir plusieurs pièces de centrage pour assurer le bon fonctionnement électrique.

Le but de l'invention est de proposer un antivol de colonne de direction qui soit simple à fabriquer, efficace, dont l'interrupteur peut être dissocié facilement du reste de l'antivol et présentant un bon fonctionnement électrique.

Il est connu du document US6040535 un antivol de colonne de direction comprenant un corps d'antivol et corps d'interrupteur fixé par clipsage.

A cet effet, la présente invention propose un antivol de colonne de direction comprenant :
- un corps d'antivol qui comprend un logement définissant un axe longitudinal de logement,
- un interrupteur qui comprend un corps d'interrupteur configuré pour être inséré dans le logement, l'interrupteur présentant un axe longitudinal d'interrupteur,
dans lequel le corps d'interrupteur comprend au moins un premier moyen d'attache, et dans lequel le corps d'antivol comprend au moins un deuxième moyen d'attache disposé au niveau du logement,
les premier et deuxième moyens d'attache étant configurés pour coopérer ensemble par clipsage pour fixer l'interrupteur au corps d'antivol.

L'antivol de l'invention est simple à fabriquer, efficace, avec un interrupteur facilement dissociable du reste de l'antivol et présentant un bon fonctionnement électrique. En outre, l'interrupteur peut être remplacé sans avoir à changer complètement l'antivol.

Suivant des modes de réalisation préférés, l'antivol de colonne de direction selon l'invention comprend une ou plusieurs des caractéristiques suivantes, prises séparément ou en combinaison :
- le corps d'interrupteur comprend au moins un premier moyen de montage en baïonnette, et
   le corps d'antivol comprend au moins un deuxième moyen de montage en baïonnette disposé au niveau du logement,
   les premier et deuxième moyens de montage en baïonnette étant configurés pour coopérer ensemble de sorte à empêcher un déplacement du corps d'interrupteur hors du logement suivant l'axe longitudinal de logement ; et/ou
- le premier moyen d'attache est un clip formant un doigt s'étendant perpendiculairement à l'axe longitudinal d'interrupteur, et le deuxième moyen d'attache comprend au moins une surface de retenue d'une extrémité du clip ; et/ou
- le premier moyen de montage en baïonnette est un ergot s'étendant perpendiculairement à l'axe longitudinal d'interrupteur, et le deuxième moyen de montage en baïonnette comprend un renfoncement et une butée,
   le renfoncement étant configuré pour recevoir l'ergot, et
   la butée s'étendant perpendiculairement à l'axe longitudinal de logement ; et/ou
- le renfoncement est configuré pour recevoir en outre le clip ; et/ou
- le clip est au moins partiellement juxtaposé à l'ergot sur le corps d'interrupteur ;
   et/ou
- le corps d'interrupteur et le corps d'antivol comprennent chacun au moins deux moyens d'attache ; et/ou
- le corps d'interrupteur et le corps d'antivol comprennent chacun au moins deux moyens de montage en baïonnette ; et/ou
- le corps d'interrupteur comprend
   une platine, configurée pour être insérée dans le logement,
   un rotor et un couvercle configurés pour être montés sur la platine et insérés avec la platine dans le logement,
   dans lequel le rotor est logé dans la platine, et
   dans lequel le couvercle est au moins partiellement logé dans la platine ; et/ou
- le couvercle est entièrement logé dans la platine; et/ou
- l'antivol comprend une ouverture de déclipsage au niveau du renfoncement permettant d'accéder au et de déclipser le premier et/ou le deuxième moyen d'attache.

D'autres caractéristiques et avantages de l'invention apparaîtront à la lecture de la description suivante d'un mode de réalisation préféré de l'invention, donné à titre d'exemple non limitatif et en référence aux dessins annexés sur lesquels :
- la figure 1 est une vue éclatée dans l'espace de l'interrupteur selon l'invention;
- la figure 2 représente l'interrupteur de la figure 1 monté ;
- les figures 3 à 5A représentent l'interrupteur de la figure 2 en cours de montage dans un corps d'antivol de colonne de direction ;
- la figure 5B représente un corps d'interrupteur et un corps d'antivol en vue en coupe selon VV de la figure 5A ;
- la figure 6 est une vue dans l'espace d'un antivol de colonne de direction selon l'invention.

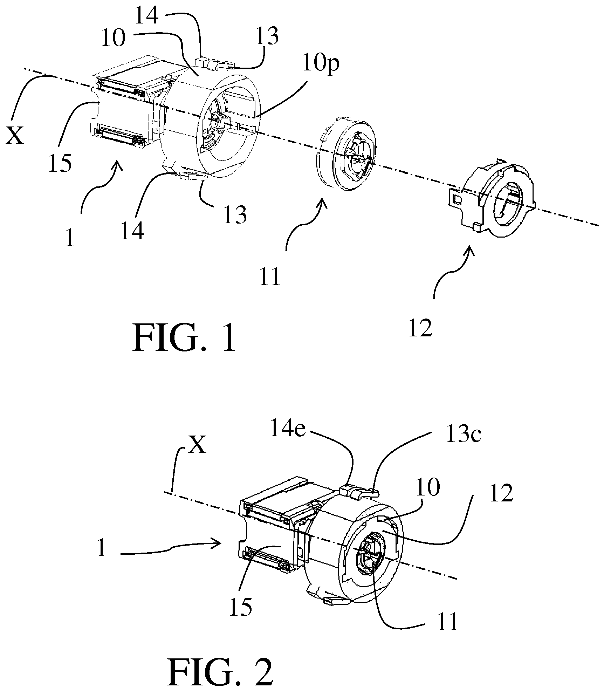

En se référant aux figures 1 et 2, la présente invention concerne un interrupteur 1 d'antivol de colonne de direction. L'interrupteur 1 comprend un connecteur 15 et un corps d'interrupteur 10 configuré pour être inséré dans un corps d'antivol 2. A cet effet, le corps d'antivol 2 comprend un logement 20 configuré pour recevoir le corps d'interrupteur 10. Le corps d'interrupteur 10 a une forme sensiblement cylindrique.

Le corps d'interrupteur 10 comprend une platine 10p, un rotor 11 et un couvercle 12. La platine 10p, le rotor 11 et le couvercle 12 sont configurés pour être montés ensemble pour former le corps d'interrupteur 10. Une fois monté, le rotor 11 est disposé entre la platine 10p et le couvercle 12.

Plus particulièrement, la platine 10p de l'interrupteur comprend un logement de forme sensiblement cylindrique configuré pour recevoir le rotor 11 et le couvercle 12.

Le couvercle 12 de l'interrupteur comprend au moins un moyen d'attache tel qu'un clip configuré pour fixer le couvercle 12 et le rotor 11 dans le logement de la platine 10p.

On entend ici par « clip », un élément élastique apte à être comprimé par une paroi lors d'un déplacement et d'être libéré pour reprendre sa forme initiale lorsque ledit élément arrive dans une cavité prévue pour le recevoir, ledit élément pouvant être sorti de la cavité en compriment ledit élément et en réalisant le déplacement en sens inverse.

Ledit au moins un clip coopère avec une structure interne disposée dans le logement de la platine 10p. Le couvercle 12 est ainsi logé, de préférence totalement, dans le logement de la platine 10p. En outre, une fois monté, le rotor 11 est totalement logé dans la platine 10p.

Avantageusement, le centrage de la platine 10p, du rotor 11 et du couvercle 12 est simplifié et réalisé à moindre coût car il n'est pas nécessaire de prévoir des pièces externes à l'interrupteur disposées entre le corps d'interrupteur 10 et le logement 20 pour centrer la platine 10p, le rotor 11 et le couvercle 12.

En outre, la forme externe du corps d'interrupteur 10 est simplifiée de même que son montage dans le logement 20. En particulier, il est plus facile de réaliser un logement 20 correspondant à la platine sans prévoir de variations supplémentaires du logement 20 correspondant à la forme de l'ensemble rotor 11 couvercle 12.

Le corps d'interrupteur 10 comprend sur sa face externe un moyen d'attache 13, ici deux moyens d'attache, en particulier des clips 13c formant chacun un doigt s'étendant perpendiculairement à un axe longitudinal d'interrupteur X. Le clip 13c comprend une origine et une extrémité de retenue. L'origine du clip 13c forme une projection radiale sur le pourtour du corps d'antivol 2, et le reste du clip 13c suit le pourtour du corps d'antivol jusqu'à l'extrémité de retenue. Le clip 13c permet une fixation du corps d'interrupteur par clipsage suivant un mouvement perpendiculaire à l'axe d'interrupteur X, en particulier suivant une rotation autour de l'axe d'interrupteur X.

Le corps d'interrupteur 10 comprend en outre sur sa face externe deux moyens de montage en baïonnette 14, en particulier des ergots 14e. L'ergot 14e s'étend perpendiculairement à l'axe d'interrupteur X. L'ergot 14e forme une large projection radiale sur le pourtour du corps d'antivol 2.

En particulier, le clip 13c est juxtaposé à l'ergot 14e sur le corps d'interrupteur 10. Le clip 13c et l'ergot 14e sont alignés suivant l'axe d'interrupteur X. Le clip 13c est disposé du côté du corps d'interrupteur 10 et l'ergot 14e est disposé du côté du connecteur 15. Le clip 13c et l'ergot 14e ont sensiblement la même taille.

Le connecteur 15 a une forme parallélépipédique et s'étend longitudinalement suivant l'axe d'interrupteur X. Le connecteur 15 a une taille inférieure au diamètre du corps d'interrupteur 10. Ainsi le connecteur 15 permet d'avoir un encombrement réduit au niveau du connecteur 15 de l'interrupteur 1 par rapport à l'art antérieur.

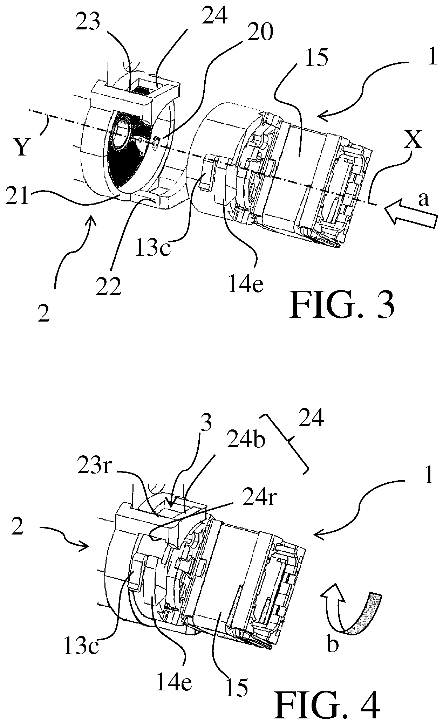

En se référant aux figures 3 à 6, le corps d'antivol 2 comprend deux demi corps, dits corps principal et secondaire, configurés pour être associés ensemble pour former le corps d'antivol 2. Chaque demi corps comprend une partie du logement 20 recevant le corps d'interrupteur 10. Le logement 20 a une forme longitudinale suivant un axe longitudinal de logement Y. Le logement 20 a une forme configurée pour recevoir le corps d'interrupteur 10 lorsqu'il est inséré suivant l'axe de logement Y qui se confond alors avec l'axe d'interrupteur X.

Plus particulièrement, le logement 20 comprend au moins une ouverture d'insertion 21 recevant chaque ergot 14e et chaque clip 13c lors de l'insertion du corps d'interrupteur 10 dans le logement 20.

Le logement 20 comprend deux parois latérales 22 qui s'étendent longitudinalement suivant un axe parallèle à l'axe de logement Y. Chaque paroi latérale est prévue sur un demi corps. La paroi latérale 22 comprend un moyen d'attache 23, en particulier une surface de retenue 23r configurée pour retenir le clip 13c une fois reçu dans le logement 20. La surface de retenue 23r s'étend longitudinalement suivant un axe parallèle à l'axe de logement Y.

La surface de retenue 23r coopère avec le clip 13c pour fixer le corps d'interrupteur 10 dans le logement 20 suivant une rotation autour de l'axe de logement Y.

La paroi latérale 22 comprend en outre un moyen de montage en baïonnette 24 qui comprend un renfoncement 24r et une butée 24b. Le renfoncement 24r permet de recevoir à la fois l'ergot 14e et le clip 13c dans la paroi 22. La butée 24b s'étend longitudinalement suivant un axe perpendiculaire à l'axe de logement Y.

Le clip 13c est élastique et est chanfreiné au niveau de son origine. Le clip 13c est ensuite recourbé sur le pourtour du corps d'antivol. L'extrémité de retenue du clip 13c s'étend radialement au-delà de la surface de retenue 23r.

La butée 24b coopère avec l'ergot 14e de sorte à empêcher le retrait du corps d'interrupteur 10 du logement 20 suivant l'axe de logement Y.

Avantageusement la configuration de l'antivol selon l'invention permet une fixation facilitée de l'interrupteur 1 par le clip 13c tout en maintenant une résistance significative au retrait de l'interrupteur 1 par l'ergot 14e et la butée 24b.

La paroi latérale 22 comprend en outre une ouverture de déclipsage 3 permettant un accès par un utilisateur au clip 13c de sorte à déclipser le clip, à savoir agir sur ledit clip en comprimant ce dernier pour le faire sortir du logement.

Avantageusement, l'ouverture de déclipsage 3 permet de démonter l'interrupteur 1 de l'antivol 2 sans avoir besoin de démonter le corps d'antivol 2.

En se référant aux figures 3 à 5B, le montage de l'interrupteur 1 dans le corps d'antivol 2 comprend une étape (a) pour insérer le corps d'interrupteur 10 dans le logement 20 du corps d'antivol 2. L'insertion se fait suivant l'axe de logement Y qui devient confondu avec l'axe d'interrupteur X. Suite à l'insertion, le clip 13c et l'ergot 14e sont disposés dans l'ouverture d'insertion 21.

Le montage comprend en outre une étape (b) pour déplacer le corps d'interrupteur 10 dans le logement 20 par un pivotement autour des axes X et Y. Lors de cette étape, la partie chanfreinée du clip 13c est insérée dans le renfoncement 24r et l'extrémité de retenue du clip 13c est repliée à l'intérieur du renfoncement 24r de la paroi latérale 21 jusqu'au niveau de la surface de retenue 23r. En raison de l'élasticité du clip 13c, l'extrémité de retenue se re-étend de sorte à coopérer avec la surface de retenue 23r et ainsi fixer le corps d'interrupteur 10 au corps d'antivol 2.

En outre, lors de l'étape (b) pour déplacer (10), l'ergot 14e est inséré dans le renfoncement 24r de sorte à être disposé au niveau de la butée 24b.

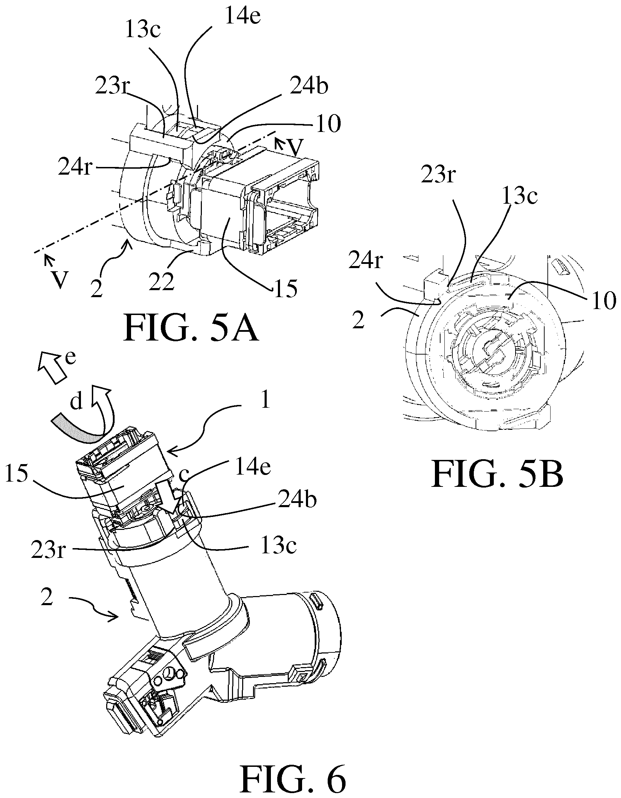

En se référant à la figure 6, le démontage de l'interrupteur 1 hors du corps d'antivol comprend une étape (c) pour déclipser le clip 13c au moyen de l'ouverture de déclipsage 3, en particulier en enfonçant l'extrémité de retenue du clip 13c pour la dissocier de la surface de retenue 23r.

En outre, le démontage comprend une étape (d) pour déplacer le corps d'interrupteur 10 dans le logement 20 par un pivotement autour des axes X et Y de sorte à dissocier complètement le clip 13c de la surface de retenue 23r ainsi que l'ergot 14 de la butée 24b, et faire sortir le clip 13c et l'ergot 14e de la paroi 21.

Le démontage comprend en outre une étape (e) pour retirer le corps d'interrupteur 10 du logement 20 suivant l'axe de logement Y.

## Revendications

1. Antivol de colonne de direction comprenant
- un corps d'antivol (2) qui comprend un logement (20) définissant un axe longitudinal de logement (Y),
- un interrupteur (1) qui comprend un corps d'interrupteur (10) configuré pour être inséré dans le logement (20), l'interrupteur présentant un axe longitudinal d'interrupteur (X), dans lequel le corps d'interrupteur (10) comprend au moins un premier moyen d'attache (13),
dans lequel le corps d'antivol (2) comprend au moins un deuxième moyen d'attache (23) disposé au niveau du logement (20),
les premier et deuxième moyens d'attache (13, 23) étant configurés pour coopérer ensemble par clipsage pour fixer l'interrupteur (1) au corps d'antivol (2),
**caractérisé en ce que** le corps d'interrupteur (10) comprend au moins un premier moyen de montage en baïonnette (14), et
dans lequel le corps d'antivol (2) comprend au moins un deuxième moyen de montage en baïonnette (24) disposé au niveau du logement (20),
les premier et deuxième moyens de montage en baïonnette (14, 24) étant configurés pour coopérer ensemble de sorte à empêcher un déplacement du corps d'interrupteur (10) hors du logement (20) suivant l'axe longitudinal de logement (Y).

2. Antivol de colonne de direction selon la revendication précédente, dans lequel le premier moyen d'attache (13) est un clip (13c) formant un doigt s'étendant perpendiculairement à l'axe longitudinal d'interrupteur (X), et le deuxième moyen d'attache (23) comprend au moins une surface de retenue (23r) d'une extrémité du clip (13c).

3. Antivol de colonne de direction selon l'une des revendications précédentes, dans lequel le premier moyen de montage en baïonnette (14) est un ergot (14e) s'étendant perpendiculairement à l'axe longitudinal d'interrupteur (X), et le deuxième moyen de montage en baïonnette (24) comprend un renfoncement (24r) et une butée (24b),
le renfoncement (24r) étant configuré pour recevoir l'ergot (14e), et
la butée (24b) s'étendant perpendiculairement à l'axe longitudinal de logement (Y).

4. Antivol de colonne de direction selon la revendication précédente et la revendication 2 s'appliquant, dans lequel le renfoncement (24r) est configuré pour recevoir en outre le clip (13c).

5. Antivol de colonne de direction selon l'une des revendications précédentes, les revendications 2 et 3 s'appliquant, dans lequel le clip (13c) est au moins partiellement juxtaposé à l'ergot (14e) sur le corps d'interrupteur (10).

6. Antivol de colonne de direction selon l'une des revendications précédentes, dans lequel le corps d'interrupteur (10) et le corps d'antivol (2) comprennent chacun au moins deux moyens d'attache (13, 23).

7. Antivol de colonne de direction selon l'une des revendications précédentes, dans lequel le corps d'interrupteur (10) et le corps d'antivol (2) comprennent chacun au moins deux moyens de montage en baïonnette (14, 24).

8. Antivol de colonne de direction selon l'une des revendications précédentes, dans lequel le corps d'interrupteur (10) comprend
- une platine (10p), configurée pour être insérée dans le logement (20) ;
- un rotor (11) et un couvercle (12) configurés pour être montés sur la platine (10p) et insérés avec la platine (10p) dans le logement (20),
dans lequel le rotor (11) est logé dans la platine (10p), et
dans lequel le couvercle (12) est au moins partiellement logé dans la platine (10p).

9. Antivol de colonne de direction selon la revendication précédente, dans lequel le couvercle (12) est entièrement logé dans la platine (10p).

10. Antivol de colonne de direction selon l'une des revendications précédentes, comprenant une ouverture de déclipsage (3) au niveau du renfoncement (24r) permettant d'accéder au et de déclipser le premier et/ou le deuxième moyen d'attache (13, 23).

## Patentansprüche

1. Diebstahlsicherung für eine Lenksäule, Folgendes umfassend
- ein Diebstahlsicherungsgehäuse (2), das eine Aufnahme (20) umfasst, eine Aufnahme-Längsachse (Y) definierend,
- einen Schalter (1), der ein Schaltergehäuse (10) umfasst, das konfiguriert ist, um in die Aufnahme (20) eingeführt zu werden, wobei der Schalter eine Schalter-Längsachse (X) aufweist, wobei das Schaltergehäuse (10) zumindest ein erstes Verbindungsmittel (13) umfasst,
wobei das Diebstahlsicherungsgehäuse (2) zumindest ein zweites Verbindungsmittel (23) umfasst, das im Bereich der Aufnahme (20) angeordnet ist,
wobei das erste und zweite Verbindungsmittel (13, 23) konfiguriert sind, um gemeinsam durch Einrasten zusammenzuwirken, um den Schalter (1) am Diebstahlsicherungsgehäuse (2) zu befestigen,
**dadurch gekennzeichnet, dass** das Schaltergehäuse (10) zumindest ein erstes Bajonett-Montagemittel (14) umfasst, und
wobei das Diebstahlsicherungsgehäuse (2) zumindest ein zweites Bajonett-Montagemittel (24) umfasst, das im Bereich der Aufnahme (20) angeordnet ist,
wobei das erste und zweite Bajonett-Montagemittel (14, 24) konfiguriert sind, um gemeinsam zusammenzuwirken, um eine Bewegung des Schaltergehäuses (10) aus der Aufnahme (20) heraus entlang der Aufnahme-Längsachse (Y) zu verhindern.

2. Diebstahlsicherung für eine Lenksäule nach dem vorherigen Anspruch, wobei das erste Verbindungsmittel (13) ein Clip (13c) ist, der einen Finger bildet, der sich senkrecht zur Schalter-Längsachse (X) erstreckt und das zweite Verbindungsmittel (23) zumindest eine Rückhaltefläche (23r) für ein Ende des Clips (13c) umfasst.

3. Diebstahlsicherung für eine Lenksäule nach einem der vorherigen Ansprüche, wobei das erste Bajonett-Montagemittel (14) eine Klaue (14e) ist, die sich senkrecht zur Schalter-Längsachse (X) erstreckt und das zweite Bajonett-Montagemittel (24) eine Vertiefung (24r) und einen Anschlag (24b) umfasst, wobei die Vertiefung (24r) konfiguriert ist, um die Klaue (14e) aufzunehmen, und sich der Anschlag (24b) senkrecht zur Aufnahme-Längsachse (Y) erstreckt.

4. Diebstahlsicherung für eine Lenksäule nach dem vorherigen Anspruch und unter Anwendung von Anspruch 2, wobei die Vertiefung (24r) konfiguriert ist, um darüber hinaus den Clip (13c) aufzunehmen.

5. Diebstahlsicherung für eine Lenksäule nach einem der vorherigen Ansprüche, unter Anwendung von Anspruch 2 und 3, wobei der Clip (13c) zumindest teilweise neben der Klaue (14e) auf dem Schaltergehäuse (10) liegt.

6. Diebstahlsicherung für eine Lenksäule nach einem der vorherigen Ansprüche, wobei das Schaltergehäuse (10) und das Diebstahlsicherungsgehäuse (2) jeweils zumindest zwei Verbindungsmittel (13, 23) umfassen.

7. Diebstahlsicherung für eine Lenksäule nach einem der vorherigen Ansprüche, wobei das Schaltergehäuse (10) und das Diebstahlsicherungsgehäuse (2) jeweils zumindest zwei Bajonett-Montagemittel (14, 24) umfassen.

8. Diebstahlsicherung für eine Lenksäule nach einem der vorherigen Ansprüche, wobei das Schaltergehäuse (10) Folgendes umfasst
- eine Platine (10p), die konfiguriert ist, um in die Aufnahme (20) eingeführt zu werden;
- einen Rotor (11) und einen Deckel (12), die konfiguriert sind, um auf der Platine (10p) montiert, und mit der Platine (10p) in die Aufnahme (20) eingeführt zu werden,
wobei der Rotor (11) auf der Platine (10p) aufgenommen ist, und
wobei der Deckel (12) zumindest teilweise auf der Platine (10p) aufgenommen ist.

9. Diebstahlsicherung für eine Lenksäule nach dem vorherigen Anspruch, wobei der Deckel (12) vollkommen auf der Platine (10p) aufgenommen ist.

10. Diebstahlsicherung für eine Lenksäule nach einem der vorherigen Ansprüche, eine Löseöffnung (3) im Bereich der Vertiefung (24r) umfassend, über die man das erste und/oder das zweite Verbindungsmittel (13, 23) zugreifen, und diese(s) lösen kann.

## Claims

1. A steering column antitheft device comprising
- an antitheft body (2) which comprises a housing (20) defining a longitudinal axis of the housing (Y),
- a switch (1) which comprises a switch body (10) configured to be inserted in the housing (20), the switch having a longitudinal axis of the switch (X), wherein the switch body (10) comprises at least one first attachment means (13),
wherein the antitheft body (2) comprises at least one second attachment means (23) disposed at the housing (20),
the first and second attachment means (13, 23) being configured to cooperate together by clipping so as to fasten the switch (1) to the antitheft body (2),
**characterized in that** the switch body (10) comprises at least one first bayonet mounting means (14), and
wherein the antitheft body (2) comprises at least one second bayonet mounting means (24) disposed at the housing (20),
the first and second bayonet mounting means (14, 24) being configured to cooperate together so as to prevent any displacement of the switch body (10) out of the housing (20) along the longitudinal axis of the housing (Y).

2. The steering column antitheft device according to the preceding claim, wherein the first attachment means (13) is a clip (13c) forming a finger extending perpendicularly to the longitudinal axis of the switch (X) and the second attachment means (23) comprises at least one surface (23r) for retaining an end of the clip (13c).

3. The steering column antitheft device according to any of the preceding claims, wherein the first bayonet mounting means (14) is a lug (14e) extending perpendicularly to the longitudinal axis of the switch (X) and the second bayonet mounting means (24) comprises a recess (24r) and a stop (24b), the recess (24r) being configured to receive the lug (14e), and
the stop (24b) extending perpendicularly to the longitudinal axis of the housing (Y).

4. The steering column antitheft device according to the preceding claim, claim 2 being applied, wherein the recess (24r) is configured to further receive the clip (13c).

5. The steering column antitheft device according to any of the preceding claims, claims 2 and 3 being applied, wherein the clip (13c) is juxtaposed, at least partially, to the lug (14e) on the switch body (10).

6. The steering column antitheft device according to any of the preceding claims, wherein the switch body (10) and the anti-theft body (2) each comprise at least two attachment means (13, 23).

7. The steering column antitheft device according to any of the preceding claims, wherein each of the switch body (10) and the antitheft body (2) comprise at least two bayonet mounting means (14, 24).

8. The steering column antitheft device according to any of the preceding claims, wherein the switch body (10) comprises
- a plate (10p), configured to be inserted in the housing (20);
- a rotor (11) and a cover (12) configured to be mounted on the plate (10p) and inserted with the plate (10p) in the housing (20),
wherein the rotor (11) is housed in the plate (10p), and
wherein the cover (12) is housed, at least partially, in the plate (10p).

9. The steering column antitheft device according to any of the preceding claims, wherein the cover (12) is entirely housed in the plate (10p).

10. The steering column antitheft device according to any of the preceding claims, comprising an unclipping opening (3) at the recess (24r) allowing accessing and unclipping the first and/or second attachment means (13, 23).
